# EUROPÄISCHE PATENTANMELDUNG

(11) **EP 4 000 787 A1**
(43) Veröffentlichungstag der Anmeldung: **25.05.2022**
(21) Anmeldenummer: 20207582.6
(22) Anmeldetag: 13.11.2020
(51) Int. Cl.: B23K 9/29

(54) **ELEKTRODENSPANNVORRICHTUNG**

(71) Anmelder: FRONIUS INTERNATIONAL GmbH, 4643 Pettenbach (AT)
(72) Erfinder: Oberndorfer, Klaus, 4643 Pettenbach (AT); Wimroither, Helmut, 4643 Pettenbach (AT); Preundler, Anton, 4643 Pettenbach (AT)
(74) Vertreter: Isarpatent

(57) **Zusammenfassung**

Elektrodenspannvorrichtung (3) zum mechanischen Einspannen einer nicht abschmelzenden stabförmigen Schweißelektrode (2) in einem Schweißbrenner (1), wobei die Elektrodenspannvorrichtung (3) eine Spannzange (3A) aufweist, welche in den Schweißbrenner (1) von hinten in ein die Spannzange (3A) umschließendes Spannzangengehäuse (3B) der Elektrodenspannvorrichtung (3) montiert ist, wobei die Spannzange (3A) relativ zu dem sie umschließenden Spannzangengehäuse (3B) zum mechanischen Festklemmen und Lösen der stabförmigen Schweißelektrode (2) entlang der Längsachse der stabförmigen Schweißelektrode (2) beweglich angeordnet ist.

## Beschreibung

Die Erfindung betrifft eine Elektrodenspannvorrichtung zum mechanischen Einspannen einer nicht abschmelzbaren stabförmigen Schweißelektrode in einem Schweißbrenner.

Bei Lichtbogenschweißverfahren können nicht abschmelzbare Schweißelektroden eingesetzt werden. Diese nicht abschmelzbaren Schweißelektroden umfassen beispielsweise Wolframelektroden für WIG-Hochleistungsschweißen. Bei derartigen Lichtbogenschweißverfahren brennt ein Lichtbogen zwischen der nicht abschmelzbaren Schweißelektrode und einem Werkstück. Der Lichtbogen und die Schweißzone werden dabei üblicherweise durch einen Mantel aus inertem Gas oder einem Gasgemisch mit aktiven Bestandteilen geschützt. Herkömmliche Schweißbrenner weisen eine Schweißelektrode fixierendes Stromkontaktelement auf, das ein Klemmelement für die nicht abschmelzbare Schweißelektrode aufweist. Weiterhin verfügt ein herkömmlicher Schweißbrenner üblicherweise über eine Schutzgasdüse, welche das Stromkontaktelement und die nicht abschmelzbare Schweißelektrode umschließt. Ferner kann ein Schweißzusatzwerkstoff zugeführt werden, von welchem ein Materialübertrag auf das zu schweißende Werkstück erfolgt. Während des Schweißprozesses wird der sich zwischen der Schweißelektrode und dem Werkstück ausbildende Lichtbogen von einer Energiequelle gespeist.

Die nicht abschmelzbare Schweißelektrode wird bei herkömmlichen Schweißbrennern durch einen Elektrodenhalter fixiert, beispielsweise eingeschraubt.

Ein derartiger herkömmlicher Schweißelektrodenhalter für einen Schweißbrenner hat allerdings den Nachteil, dass die nicht abschmelzbare Schweißelektrode entweder überhaupt nicht oder nur mit erheblichem technischen Aufwand austauschbar ist oder gewartet, wie beispielsweise geschliffen werden kann.. Weiterhin ist die innerhalb des Elektrodenhalters befestigte Schweißelektrode in Längsrichtung nicht einfach verschiebbar. Demzufolge ist es auch nicht in einfacher Weise möglich einzustellen, wie weit die Elektrodenspitze der Schweißelektrode aus dem jeweiligen Schweißbrenner hervorsteht.

Darüber hinaus können bei herkömmlichen Elektrodenhaltern Materialdehnungen, die aufgrund von Schweißzyklen während des Schweißprozesses entstehen, von dem Elektrodenhalter nicht aufgenommen werden, sodass sich die Spannkraft zum Halten der Schweißelektrode im Laufe der Zeit vermindert. Das hat zur Folge, dass der Nutzer bzw. der Schweißer die Spannkraft beim Einspannen der stabförmigen Schweißelektrode in gewissen Zeitabständen wieder nachjustieren muss. Darüber hinaus können die auftretenden Materialdehnungen zu Beschädigungen der Spannhülse des Elektrodenhalters führen.

Es ist daher eine Aufgabe der vorliegenden Erfindung, eine Elektrodenspannvorrichtung zum mechanischen Einspannen einer nicht abschmelzbaren stabförmigen Schweißelektrode in einem Schweißbrenner zu schaffen, welche die oben genannten Nachteile vermeidet und welche insbesondere keine Nachjustierung aufgrund von Materialdehnungen erfordert.

Diese Aufgabe wird erfindungsgemäß durch eine Elektrodenspannvorrichtung mit den in Patentanspruch 1 angegebenen Merkmalen gelöst.

Die Erfindung schafft demnach eine Elektrodenspannvorrichtung zur mechanischen Einspannung einer nicht abschmelzbaren stabförmigen Schweißelektrode in einem Schweißbrenner, wobei die Elektrodenspannvorrichtung eine Spannzange aufweist, welche in den Schweißbrenner von hinten in ein die Spannzange umschließendes Spannzangengehäuse der Elektrodenspannvorrichtung montiert ist, wobei die Spannzange relativ zu dem sie umschließenden Spannzangengehäuse zum mechanischen Festklemmen und Lösen der stabförmigen Schweißelektrode entlang der Längsachse der stabförmigen Schweißelektrode beweglich angeordnet ist.

Das Lösen der stabförmigen Schweißelektrode erfolgt, um die Schweißelektrode entweder zu entfernen oder eine neue Schweißelektrode in die Elektrodenspannvorrichtung einzuführen oder um die Position der Schweiß-elektrode im Schweißbrenner zu verändern oder um die Schweiß-elektrode z.B. zu schleifen.

Bei einer möglichen Ausführungsform der erfindungsgemäßen Elektrodenspannvorrichtung weist die Spannzange an ihrem vorderen Endabschnitt mehrere radial angeordnete und durch Schlitze getrennte sowie sich radial und/oder axial verbreiternde Spannbacken auf.

Bei einer möglichen Ausführungsform der erfindungsgemäßen Elektrodenspannvorrichtung werden die Spannbacken der Spannzange durch eine innenliegende Klemm- und Stromkontaktfläche des umschließenden Spannzangengehäuses zum zentrierten Halten der in die Spannzange eingeführten stabförmigen Schweißelektrode zusammengepresst, sobald die Spannzange relativ zu dem sie umschließenden Spannzangengehäuse in dem Schweißbrenner nach hinten bewegt wird.

Bei einer weiteren möglichen Ausführungsform der erfindungsgemäßen Elektrodenspannvorrichtung wird die Spannzange relativ zu dem sie umschließenden Spannzangengehäuse durch einen Federmechanismus der Elektrodenspannvorrichtung bewegt.

Bei einer weiteren möglichen Ausführungsform der erfindungsgemäßen Elektrodenspannvorrichtung weisen die Spannbacken der Spannzange jeweils Flachfräsungen zur Spannkraftoptimierung auf. Darüber hinaus kann hierdurch der Stromübergang verbessert werden.

Bei einer weiteren möglichen Ausführungsform der erfindungsgemäßen Elektrodenspannvorrichtung weisen die an dem vorderen Endabschnitt der Spannzange vorgesehenen sich radial und/oder axial verbreiternden Spannbacken der Spannzange einen vorgegebenen ersten Öffnungswinkel auf.

Bei einer weiteren möglichen Ausführungsform der erfindungsgemäßen Elektrodenspannvorrichtung weist das Spannzangengehäuse an einem vorderen Endabschnitt eine Anpressfläche mit einem zweiten Öffnungswinkel auf.

Bei einer weiteren möglichen Ausführungsform der erfindungsgemäßen Elektrodenspannvorrichtung ist der erste Öffnungswinkel der Spannzange größer als der zweite Öffnungswinkel des umschließenden Spannzangengehäuses.

Bei einer möglichen Ausführungsform der erfindungsgemäßen Elektrodenspannvorrichtung liegt der erste Öffnungswinkel der Spannzange in einem Winkelbereich von 20 bis 120°, insbesondere in einem Winkelbereich von 35° bis 75°, und beträgt vorzugsweise 70°. (BITTE AUCH IM ANSPRUCH ÄNDERN.)

Bei einer weiteren möglichen Ausführungsform der erfindungsgemäßen Elektrodenspannvorrichtung liegt der zweite Öffnungswinkel des Spannzangengehäuses in einem Winkelbereich von 0 bis 120°, insbesondere in einem Winkelbereich von 0 bis 80° und beträgt vorzugsweise 70°. (BITTE AUCH IM ANSPRUCH ÄNDERN.)

Bei einer weiteren möglichen Ausführungsform der erfindungsgemäßen Elektrodenspannvorrichtung ist die entlang der Längsachse der stabförmigen Schweißelektrode beweglich angeordnete Spannzange mit einer an einer Rückseite des Schweißbrenners vorgesehenen manuell betätigbaren Druckkappe verbunden, welche den Federmechanismus der Elektrodenspannvorrichtung umschließt.

Bei einer weiteren möglichen Ausführungsform der erfindungsgemäßen Elektrodenspannvorrichtung weist das Spannzangengehäuse Radialbohrungen auf, durch welche ein dem Schweißbrenner zugeführtes Schutzgas in eine die Schweißelektrode umschließende Gasdüse abgegeben wird.

Bei einer weiteren möglichen Ausführungsform der erfindungsgemäßen Elektrodenspannvorrichtung weist die an dem vorderen Endabschnitt des Spannzangengehäuses vorgesehene Anpressfläche einen Radius auf, der in einem Bereich von 0 bis 1 mm liegt und vorzugsweise 0,1 mm beträgt.

Bei einer weiteren möglichen Ausführungsform der erfindungsgemäßen Elektrodenspannvorrichtung ist die Oberfläche der Spannzange und/oder des Spannzangengehäuses durch eine stromleitende Oxidationsschutzschicht zum Schutz vor Oxidation und/oder zum Schutz vor Verschleiß bei Benutzung, insbesondere beim Verschieben der Spannzange gegenüber dem Spannzangengehäuse, umschlossen.

Bei einer möglichen Ausführungsform der erfindungsgemäßen Elektrodenspannvorrichtung besteht die stromleitende Oxidationsschutzschicht aus Silber oder Nickel oder weist eine Hochtemperatur-Gleitlackbeschichtung auf.

Bei einer weiteren möglichen Ausführungsform der erfindungsgemäßen Elektrodenspannvorrichtung besteht das Material der Spannzange aus einer Kupferlegierung.

Bei einer weiteren möglichen Ausführungsform der erfindungsgemäßen Elektrodenspannvorrichtung sind an einem Gehäuse des Schweißbrenners Zusatzkomponenten, insbesondere eine Kaltdraht- oder Heißdrahtzuführeinheit, montierbar.

Bei einer weiteren möglichen Ausführungsform der erfindungsgemäßen Elektrodenspannvorrichtung sind eine erste Stromkontaktfläche zwischen der stabförmigen Schweißelektrode und der Spannzange und eine zweite Stromkontaktfläche zwischen der Spannzange und dem Spannzangengehäuse axial zueinander versetzt angeordnet.

Bei einer weiteren möglichen Ausführungsform der erfindungsgemäßen Elektrodenspannvorrichtung weisen die Schlitze der Spannzange eine Schlitzlänge von 10 bis 20 mm, vorzugsweise 14 mm, auf.

Im Weiteren werden mögliche Ausführungsformen der erfindungsgemäßen Elektrodenspannvorrichtung unter Bezugnahme auf die beigefügten Figuren näher erläutert.

Es zeigen:
- Fig. 1: eine Schnittansicht durch eine mögliche Ausführungsform des Schweißbrenners mit einer erfindungsgemäßen Elektrodenspannvorrichtung;
- Fig. 2: eine Ansicht zur Erläuterung einer Montage einer erfindungsgemäßen Elektrodenspannvorrichtung in einen Schweißbrenner;
- Fig. 3: eine Ansicht auf ein mögliches Ausführungsbeispiel einer Spannzange einer erfindungsgemäßen Elektrodenspannvorrichtung;
- Fig. 4A, 4B: Schnittansichten zur Erläuterung möglicher Ausführungsvarianten einer erfindungsgemäßen Elektrodenspannvorrichtung;
- Fig. 5: eine Vorderansicht auf eine erfindungsgemäße Elektrodenspannvorrichtung mit eingespannter nicht abschmelzbarer Schweißelektrode.

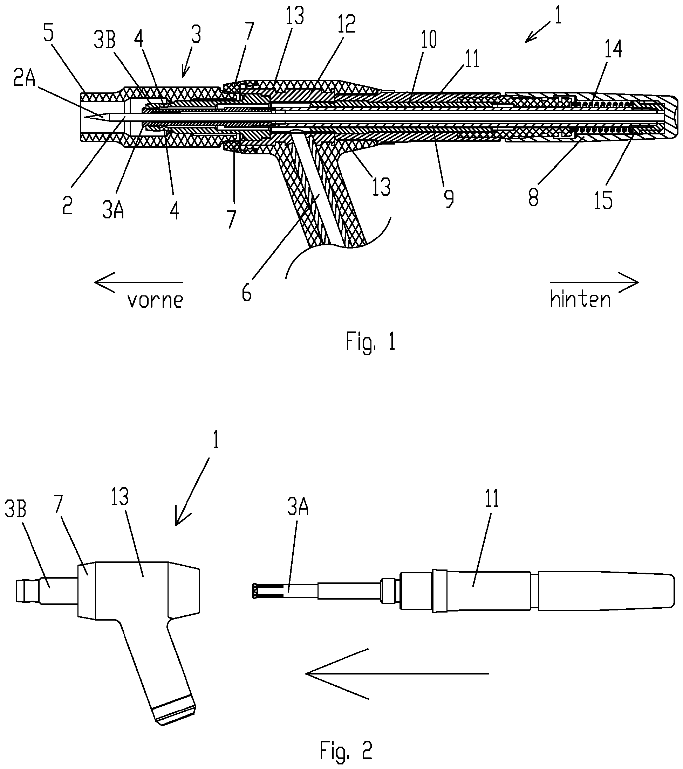

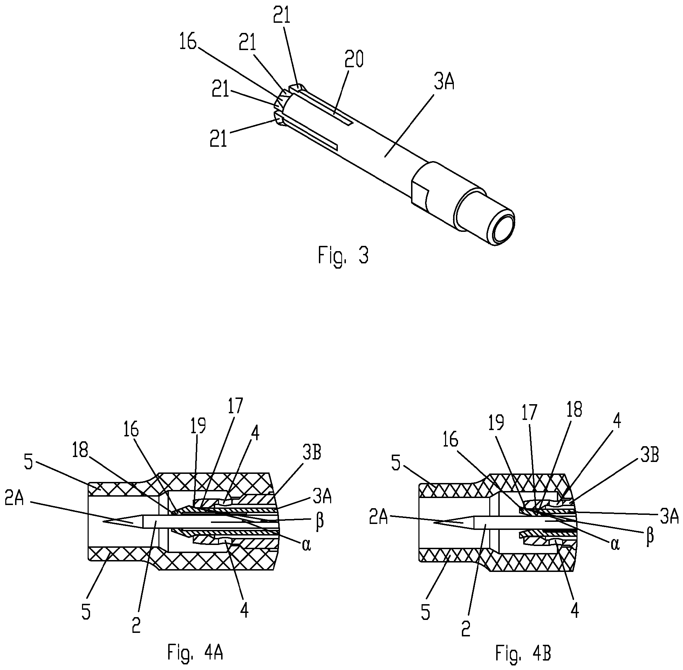

Fig. 1 zeigt eine Schnittansicht durch ein Ausführungsbeispiel einer erfindungsgemäßen Elektrodenspannvorrichtung 3 zum mechanischen Einspannen einer nicht abschmelzbaren stabförmigen Schweißelektrode 2 in einen Schweißbrenner 1. Figuren 4A, 4B zeigen weitere Schnittansichten zur Darstellung bevorzugter Ausführungsformen der erfindungsgemäßen Elektrodenspannvorrichtung 3.

Fig. 1 zeigt einen Schweißbrenner 1 mit einer erfindungsgemäßen Elektrodenspannvorrichtung 3 zum mechanischen Einspannen einer nicht abschmelzbaren stabförmigen Schweißelektrode 2 in den Schweißbrenner 1. In Fig. 1 ist auf der linken vorderen Seite des Schweißbrenners 1 eine Spitze 2A der stabförmigen Schweißelektrode 2 erkennbar. Die Elektrodenspannvorrichtung 3 weist eine Spannzange 3A auf, welche in den Schweißbrenner 1 von hinten, d.h. in Fig. 1 von rechts, in ein die Spannzange 3A umschließendes Spannzangengehäuse 3B der Elektrodenspannvorrichtung 3 montiert ist. Es bestehen zwei mögliche Vorgehensweisen, die zum Ergebnis führen, dass die Spannzange 3A von hinten in das Spannzangengehäuse 3B montiert ist. Bei der ersten Vorgehensweise befindet sich das Spannzangengehäuse 3B in dem Schweißbrenner und die Spannzange 3A wird dann eingeführt. Bei der zweiten Vorgehensweise befindet sich die Spannzange 3A in dem Schweißbrenner und das Spannzangengehäuse 3B wird von vorne eingeführt und aufgeschraubt. Die Spannzange 3A ist relativ zu dem sie umschließenden Spannzangengehäuse 3B zum mechanischen Festklemmen oder Lösen der stabförmigen Schweißelektrode 2 entlang der Längsachse der stabförmigen Schweißelektrode 2 beweglich angeordnet. Wie man in Fig. 1 erkennen kann, weist das Spannzangengehäuse 3B Radialbohrungen 4 auf, durch welche ein dem Schweißbrenner 1 zugeführtes Schutzgas in eine die Schweißelektrode 2 umschließende Gasdüse 5 abgegeben wird. Das Schutzgas wird dem Schweißbrenner 1 über ein Schlauchpaket über Versorgungsleitungen 6 zugeführt. Der Schweißbrenner 1 besitzt einen Isolierring 7 zur elektrischen und thermischen Isolation des Schweißbrenners 1. Die entlang der Längsachse der stabförmigen Schweißelektrode 2 beweglich angeordnete Spannzange 3A ist mit einer an einer Rückseite des Schweißbrenners 1 vorgesehenen manuell betätigbaren Druckkappe 8 verbunden, wie in Fig. 1 dargestellt. Bei der in Fig. 1 dargestellten Ausführungsform umschließt die Druckkappe 8 einen Federmechanismus zum Bewegen der Spannzange 3A relativ zu dem sie umschließenden Spannzangengehäuse 3B. Die Schweißelektrode 2 befindet sich in einem Innenzylinder 9 des Schweißbrenners 1, welcher die Schweißelektrode 2 umschließt, wie in der Schnittansicht gemäß Fig. 1 dargestellt. Der Schweißbrenner 1 weist weiterhin einen Außenzylinder 10 auf, der von einem Mantel 11 umschlossen ist. Weiterhin hat der Schweißbrenner 1 ein Aufnahmegehäuse 12, das in einen Gummimantel 13 eingebettet ist. Bei dem in Fig. 1 dargestellten Ausführungsbeispiel weist der Federmechanismus eine Druckfeder 14 auf, die an der Rückseite an einem Federanschlag 15 anliegt. Die Druckkappe 8 umschließt die Feder 14 und den Federanschlag 15. Die Spannzange 3A kann beim Zusammenbau von hinten durch eine Klemmkontur geschoben werden, wie auch in Fig. 2 dargestellt. Ein umständliches Verschrauben der Schweißelektrode 2 in den Schweißbrenner 1 von vorne wird auf diese Weise vermieden.

Die Figuren 4A, 4B zeigen Detailansichten des vorderen Abschnittes des Schweißbrenners 1. Figuren 4A, 4B zeigen zwei alternative Ausführungsformen der erfindungsgemäßen Elektrodenspannvorrichtung 3. Man erkennt in den Figuren 4A, 4B die Spannzange 3A, welche von dem Spannzangengehäuse 3B umschlossen wird. Wie man in den Figuren 4A, 4B erkennen kann, weist die Spannzange 3A an ihrem vorderen Endabschnitt mehrere durch Schlitze 20 getrennte Spannbacken 16 auf. Diese werden durch eine innenliegende Klemmfläche 17 des umschließenden Spannzangengehäuses 3B zum zentrierten Halten der in die Spannzange 3A eingeführten stabförmigen Schweißelektrode 2 zusammengepresst, sobald die Spannzange 3A relativ zu dem sie umschließenden Spannzangengehäuse 3B in dem Schweißbrenner 1 nach hinten bewegt wird. Figuren 4A, 4B zeigen die Schweißelektrode 2 im eingespannten Zustand, d.h. in einem Zustand, bei dem die Spannbacken 16 der Spannzange 3A durch die Klemm- und Stromkontaktflächen des umschließenden Spannzangengehäuses 3B zusammengepresst sind. Durch manuelles Betätigen der an dem Schweißbrenner 1 hinten vorgesehenen Druckkappe 8, welche die Druckfeder 14 umschließt, kann die Spannzange 3A relativ zu dem sie umgreifenden Spannzangengehäuse 3B nach vorne gedrückt werden, sodass sich die von der Klemmkontaktfläche 17 ausgeübte Spannkraft aufgrund der Form der Spannbacken 16 vermindert. Hierdurch wird die Haltekraft zum zentrierten Halten der Schweißelektrode 2 so weit abgesenkt, dass die Schweißelektrode 2 von vorne aus dem Schweißbrenner 1 in einfacher Weise herausgeführt werden kann, solange die Druckkappe 8 gepresst bleibt. Auf diese Weise ist es möglich, entweder eine Schweißelektrode 2 durch eine neue Schweißelektrode zu ersetzen oder einzustellen, inwieweit die Spitze 2A der Schweißelektrode 2 aus dem Schweißbrenner 1 hervorragt. Das Material der Spannzange 3A kann bei einer möglichen Ausführungsform aus einer Kupferlegierung, insbesondere einer harten Kupferlegierung, bestehen. Zudem kann die Oberfläche der Spannzange 3A und/oder des Spannzangengehäuses 3B durch eine stromleitende Oxidationsschutzschicht zum Schutz vor Oxidation umschlossen sein. Diese stromleitende Oxidationsschutzschicht besteht bei einer möglichen Ausführungsform aus Silber oder Nickel. Weiterhin kann die stromleitende Oxidationsschutzschicht auch eine Hochtemperatur-Gleitlackbeschichtung aufweisen. Zwischen der stabförmigen Schweißelektrode 2 und der Spannzange 3A besteht eine erste Stromkontaktfläche 18, wie in den Figuren 4A, 4B dargestellt. Die mechanische Klemmfläche 17, welche zum Festklemmen der Spannzange 3A durch das umschließende Spannzangengehäuse 3B vorgesehen ist, bildet eine zweite Stromkontaktfläche 19 aus. Wie man in den Figuren 4A, 4B erkennen kann, sind die erste Stromkontaktfläche 18 zwischen der stabförmigen Schweißelektrode 2 und der Spannzange 3A und die zweite Stromkontaktfläche 19 zwischen der Spannzange 3A und dem Spannzangengehäuse 3B entlang der Längsachse zueinander axial versetzt angeordnet. Hierdurch wird verhindert, dass bei hohen elektrischen Strömen ein ungewolltes Verkleben der Spannzange 3A mit dem Spannzangengehäuse 3B erfolgt. Dies ist insbesondere bei hohen Schweißleistungen erforderlich. Durch die versetzte Anordnung der Stromkontaktflächen 18, 19 wird zudem eine zusätzliche mechanische Federwirkung erzielt. Auf diese Weise können Wärmeausdehnungen der Bauteile bzw. Komponenten, die insbesondere bei hohen Schweißleistungen verstärkt auftreten, aufgenommen bzw. ausgeglichen werden. Die Spannzange 3A und das umschließende Spannzangengehäuse 3B liegen vorzugsweise dicht aufeinander, wobei das Spannzangengehäuse 3B im Kontaktbereich einen Radius aufweist. Hierdurch kann gewissermaßen ein Abdruck des Spannzangengehäuses 3B in die umschlossene Spannzange 3A verhindert werden, insbesondere bei hohen Stromleistungen oder bei vielen Betätigungsvorgängen zum Spannen, Lösen bzw. Einrichten der Schweiß-elektrode 2.

Der Federmechanismus kann alternativ auch durch einen gesteuerten Aktuator betätigt werden.

Fig. 2 zeigt die Montage bzw. den Zusammenbau eines Schweißbrenners 1. Wie man in Fig. 2 erkennen kann, wird die Spannzange 3A von hinten durch eine Aufnahmekontur des umschließenden Spannzangengehäuses 3B geschoben. Hierdurch kann ein umständliches Verschrauben von vorne entfallen. Dies führt zu einer Handhabungserleichterung.

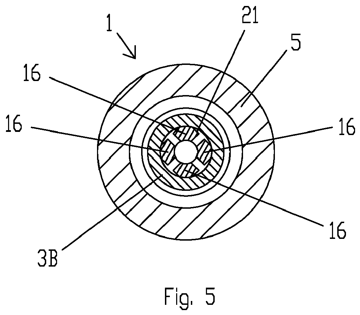

Fig. 3 zeigt ein Ausführungsbeispiel einer Spannzange 3A der erfindungsgemäßen Elektrodenspannvorrichtung 3. Die Spannzange 3A weist an ihrem vorderen Endabschnitt, d.h. im eingebauten Zustand nach vorne weisend, mehrere radial angeordnete durch Schlitze 20 voneinander getrennte Spannbacken 16 auf. Diese verbreitern sich bei dem in Fig. 3 dargestellten Ausführungsbeispiel vorne radial nach außen. Die in Fig. 3 dargestellte Spannzange 3A ist im eingebauten Zustand relativ zu dem sie umschließenden Spannzangengehäuse 3B beweglich angeordnet. Die Schlitze 20 der Spannzange 3A weisen bei einer möglichen Implementierung eine Schlitzlänge von 10 bis 20 mm, vorzugsweise 14 mm, auf. Bei der in Fig. 3 dargestellten Ausführungsform weisen die Spannbacken 16 zudem Flachfräsungen 21 zur Spannkraftoptimierung auf. Diese Flachfräsungen 21 sind auch auf der Vorderansicht gemäß Fig. 5 erkennbar. Wie in Fig. 5 erkennbar, wird die Schweißelektrode 2 beispielsweise durch vier gleichmäßig beabstandete Spannbacken 16 der Spannzange 3A zentriert gehalten. Die Anzahl der Spannbacken 16 kann variieren. Das Spannzangengehäuse 3B umschließt die Spannbacken 16 und presst diese gegen die zylindrische Oberfläche der Schweißelektrode 2, wie in Fig. 5 erkennbar. Die Spannbacken 16 weisen Flachfräsungen 21 auf, wie in Fig. 5 dargestellt. Aufgrund der Flachfräsungen 21 kann die Spannkraft, welche auf die Spannbacken 16 ausgeübt wird, erhöht werden. An einem vorderen Endabschnitt der Spannzange 3A sind sich radial verbreiternde Spannbacken 16 vorgesehen. Diese Spannbacken 16 weisen einen ersten Öffnungswinkel α auf, wie in den Figuren 4A, 4B dargestellt. Das Spannzangengehäuse 3B weist an einem vorderen Endabschnitt eine Anpressfläche 17 mit einem zweiten Öffnungswinkel β auf, wie in den Figuren 4A, 4B dargestellt. Der erste Öffnungswinkel α der Spannzange 3A ist dabei größer als der zweite Öffnungswinkel β des umschließenden Spannzangengehäuses 3B. Bei einer möglichen Ausführungsform liegt der erste Öffnungswinkel α der sich verbreiternden Spannbacken 16 in einem Winkelbereich von 20 bis 50°. Bei einer möglichen Ausführungsform beträgt der erste Öffnungswinkel α 35°. Der zweite Öffnungswinkel β der Anpressfläche 17 am vorderen Endabschnitt des Spannzangengehäuses 3B liegt vorzugsweise in einem Winkelbereich von 0 bis 50°. Der zweite Öffnungswinkel β beträgt bei einer möglichen Ausführungsform 30°. Bei einer möglichen Ausführungsform weist zudem die an dem vorderen Endabschnitt des Spannzangengehäuses 3B vorgesehene Anpressfläche 17 einen Radius auf Dieser kann beispielsweise in einem Bereich von 0 bis 1 mm und beträgt vorzugsweise 0,1 mm.

An dem in Fig. 1 dargestellten Gehäusemantel 11 des Schweißbrenners 1 können bei einer möglichen Ausführungsform weitere Zusatzkomponenten montiert werden. Diese umfassen beispielsweise eine Kaltdraht- oder Heißdrahtzuführeinheit. Das in Fig. 1 dargestellte WIG-Elektrodenspannsystem spannt die Schweißelektrode 2 mit einer integrierten Druckfeder 14 mithilfe einer Spannzange 3A und einem diese umschließenden Spannzangengehäuse 3B. Aufgrund der besonderen Geometrie der Spannzange 3A und des umschließenden Spannzangengehäuses 3B ist es möglich, die Spannkraft zu maximieren und gleichzeitig mögliche Materialausdehnungen, die während des Schweißprozesses auftreten, auszugleichen, sodass keine Nachjustierung erfolgen muss. Die besondere Anordnung der Stromkontaktflächen 18, 19, insbesondere deren axiale Versetzung zueinander entlang der Längsachse, erlaubt zudem, den Schweißprozess mit hohen Stromamplituden durchzuführen, ohne dass es zu ungewollten Verklebungen der Spannzange 3A mit dem Spannzangengehäuse 3B kommt. Durch die besondere Anordnung der Stromkontaktflächen 18, 19 wird ein stabiler und konstanter Stromübergang gewährleistet. Dies dient auch zur Stabilisierung des während des Schweißprozesses entstehenden Lichtbogens. Selbst bei hohen Stromstärken verschweißen die Spannzange 3A und das Spannzangengehäuse 3B nicht miteinander, wodurch ein zuverlässiges Spannen und Lösen der Schweißelektrode 2 gewährleistet wird. Das Elektrodenspannsystem bzw. die erfindungsgemäße Elektrodenspannvorrichtung 3 bieten zudem Platz zum Anbringen von Zusatzkomponenten an den Gehäusemantel 11 des Schweißbrenners 1. Die relative Lage der Stromkontaktflächen 18, 19 kann unterschiedlich sein. Bei dem in Fig. 4A dargestellten Ausführungsbeispiel liegt die ringförmige durch Schlitze segmentierte erste Stromkontaktfläche 18 vor der ebenfalls ringförmigen segmentierten zweiten Stromkontaktfläche 19, d.h., die erste Stromkontaktfläche 18 liegt näher zu der Spitze 2A der Schweißelektrode 2. Bei dem in Fig. 4B dargestellten Ausführungsbeispiel verhält es sich umgekehrt, d.h., hier liegt die zweite ringförmige segmentierte Stromkontaktfläche 19 in Längsrichtung näher zu der Spitze 2A der Schweißelektrode 2. Die axiale Versetzung der Stromkontaktflächen 18, 19 kann in beiden Ausführungsbeispielen im Bereich von 0,5 mm bis 15 mm, vorzugsweise 3 mm, liegen.

### BEZUGSZEICHENLISTE

- 1: Schweißbrenner
- 2: Schweißelektrode
- 3: Elektrodenspannvorrichtung
- 3A: Spannzange
- 3B: Spannzangengehäuse
- 4: Radialbohrungen
- 5: Schutzgasdüse
- 6: Zuführleitungen
- 7: Isolierring
- 8: Druckkappe
- 9: Innenzylinder
- 10: Außenzylinder
- 11: Gehäusemantel
- 12: Schweißbrennergehäuse
- 13: Gummimantel
- 14: Druckfeder
- 15: Druckfederanschlag
- 16: Spannbacken
- 17: Anpressfläche
- 18: erste Stromkontaktfläche
- 19: zweite Stromkontaktfläche
- 20: Schlitze
- 21: Flachfräsungen

## Patentansprüche

1. Elektrodenspannvorrichtung (3) zum mechanischen Einspannen einer nicht abschmelzenden stabförmigen Schweißelektrode (2) in einem Schweißbrenner (1), wobei die Elektrodenspannvorrichtung (3) eine Spannzange (3A) aufweist, welche in den Schweißbrenner (1) von hinten in ein die Spannzange (3A) umschließendes Spannzangengehäuse (3B) der Elektrodenspannvorrichtung (3) montiert ist, wobei die Spannzange (3A) relativ zu dem sie umschließenden Spannzangengehäuse (3B) zum mechanischen Festklemmen und Lösen der stabförmigen Schweißelektrode (2) entlang der Längsachse der stabförmigen Schweißelektrode (2) beweglich angeordnet ist.

2. Elektrodenspannvorrichtung nach Anspruch 1,
wobei die Spannzange (3A) an ihrem vorderen Endabschnitt mehrere radial angeordnete und durch Schlitze (20) getrennte sowie sich radial und/oder axial verbreiternde Spannbacken (16) aufweist, die durch eine innenliegende Klemm- und Stromkontaktfläche des umschließenden Spannzangengehäuses (3B) zum zentrierten Halten der in die Spannzange (3A) eingeführten stabförmigen Schweißelektrode (2) zusammengepresst werden, sobald die Spannzange (3A) relativ zu dem sie umschließenden Spannzangengehäuse (3B) nach hinten bewegt wird.

3. Elektrodenspannvorrichtung nach Anspruch 2,
wobei die Spannzange (3A) relativ zu dem sie umschließenden Spannzangengehäuse (3B) durch einen Federmechanismus der Elektrodenspannvorrichtung (3) bewegt wird.

4. Elektrodenspannvorrichtung nach Anspruch 2 oder 3,
wobei die Spannbacken (16) der Spannzange (3A) Flachfräsungen (21) zur Spannkraftoptimierung aufweisen.

5. Elektrodenspannvorrichtung nach einem der vorangehenden Ansprüche,
wobei die an dem vorderen Endabschnitt der Spannzange (3A) vorgesehenen sich radial und/oder axial verbreiternden Spannbacken (16) einen vorgegebenen ersten Öffnungswinkel, α, aufweisen.

6. Elektrodenspannvorrichtung nach einem der vorangehenden Ansprüche,
wobei das Spannzangengehäuse (3B) an einem vorderen Endabschnitt eine Anpressfläche (17) mit einem zweiten Öffnungswinkel, β, aufweist.

7. Elektrodenspannvorrichtung nach Anspruch 5 und 6, wobei der erste Öffnungswinkel, a, der Spannzange (3A) größer ist als der zweite Öffnungswinkel, β, des umschließenden Spannzangengehäuses (3B),
wobei der erste Öffnungswinkel, α, in einem Winkelbereich von 20 bis 90° liegt und vorzugsweise 35° beträgt, und wobei der zweite Öffnungswinkel, β, in einem Winkelbereich von 0° bis 90° liegt und vorzugsweise 30° beträgt.

8. Elektrodenspannvorrichtung nach einem der vorangehenden Ansprüche 3 bis 7,
wobei die entlang der Längsachse der stabförmigen Schweißelektrode (2) beweglich angeordnete Spannzange (3A) mit einer an einer Rückseite des Schweißbrenners (1) vorgesehenen manuell betätigbaren Druckkappe (8) verbunden ist, welche den Federmechanismus der Elektrodenspannvorrichtung (3) umschließt.

9. Elektrodenspannvorrichtung nach einem der vorangehenden Ansprüche,
wobei das Spannzangengehäuse (3B) Radialbohrungen (4) aufweist, durch welche ein dem Schweißbrenner (1) zugeführtes Schutzgas in eine die Schweißelektrode (2) umschließende Gasdüse (5) abgegeben wird.

10. Elektrodenspannvorrichtung nach einem der vorangehenden Ansprüche,
wobei die an dem vorderen Endabschnitt des Spannzangengehäuses (3B) vorgesehene Anpressfläche (17) einen Radius aufweist, der in einem Bereich von 0 bis 1 mm liegt und vorzugsweise 0,1 mm beträgt.

11. Elektrodenspannvorrichtung nach einem der vorangehenden Ansprüche 1 bis 10,
wobei die Oberfläche der Spannzange (3A) und/oder des Spannzangengehäuses (3B) durch eine stromleitende Oxidationsschutzschicht zum Schutz vor Oxidation und zum Schutz vor Verschleiß umschlossen ist,
wobei die stromleitende Oxidationsschutzschicht vorzugsweise aus Silber oder Nickel besteht oder eine Hochtemperatur-Gleitlackbeschichtung aufweist.

12. Elektrodenspannvorrichtung nach einem der vorangehenden Ansprüche 1 bis 11,
wobei das Material der Spannzange (3A) aus einer Kupferlegierung besteht.

13. Elektrodenspannvorrichtung nach einem der vorangehenden Ansprüche 1 bis 12,
wobei an einem Gehäusemantel (11) des Schweißbrenners (1) Zusatzkomponenten, insbesondere eine Kaltdraht- oder Heißdrahtzuführeinheit, montierbar sind.

14. Elektrodenspannvorrichtung nach einem der vorangehenden Ansprüche 1 bis 13,
wobei eine erste Stromkontaktfläche (18) zwischen der stabförmigen Schweißelektrode (2) und der Spannzange(3A) und
eine zweite Stromkontaktfläche (19) zwischen der Spannzange (3A) und dem Spannzangengehäuse (3B) axial versetzt zueinander angeordnet sind.

15. Elektrodenspannvorrichtung nach einem der vorangehenden Ansprüche 2 bis 14,
wobei die Schlitze (20) der Spannzange (3A) eine Schlitzlänge von 10 bis 20 mm, insbesondere 14 mm, aufweisen.
